# EUROPÄISCHE PATENTSCHRIFT

(11) **EP 1 135 958 B1**
(45) Veröffentlichungstag und Bekanntmachung des Hinweises auf die Patenterteilung: **13.02.2008**
(21) Anmeldenummer: 99957682.0
(22) Anmeldetag: 01.12.1999
(51) Int. Cl.: H04Q 11/04

(54) **VERFAHREN ZUR KONFIGURIERUNG EINER NETZWERKABSCHLUSS-EINHEIT**
METHOD FOR CONFIGURING A NETWORK TERMINATION UNIT
PROCEDE DE CONFIGURATION D'UNE UNITE DE TERMINAISON DE RESEAU

(30) Priorität: 01.12.1998 AT 202898
(43) Veröffentlichungstag der Anmeldung: 26.09.2001
(73) Patentinhaber: TELEFONAKTIEBOLAGET LM ERICSSON (publ), 164 83 Stockholm (SE)
(72) Erfinder: PFEIFFER, Johann, A-1100 Wien (AT)
(74) Vertreter: Gibler, Ferdinand
(86) Internationale Anmeldenummer: PCT/AT1999/000293
(87) Internationale Veröffentlichungsnummer: WO 2000/033602

(56) Entgegenhaltungen:
- GB-A- 2 324 676
- GUNDSTROEM M ET AL: "AN ATM END SYSTEM DESIGN FOR NETWORK TERMINATION IN HETEROGENEOUS NETWORK ENVIRONMENT" GLOBAL TELECOMMUNICATIONS CONFERENCE (GLOBECOM),US,NEW YORK, IEEE,1996, Seiten 1534-1538, XP000748709 ISBN: 0-7803-3337-3
- DRURY D M: "ATM traffic management and the impact of ATM switch design" COMPUTER NETWORKS AND ISDN SYSTEMS,NL,NORTH HOLLAND PUBLISHING. AMSTERDAM, Bd. 28, Nr. 4, 1. Februar 1996 (1996-02-01), Seiten 471-479, XP004002979 ISSN: 0169-7552
- RUI TANG ET AL: "A polling-based scheduling scheme for guaranteed quality-of-service wireless multiple access to ATM networks" ICCT'98. 1998 INTERNATIONAL CONFERENCE ON COMMUNICATION TECHNOLOGY. PROCEEDINGS (IEEE CAT. NO.98EX243), ICCT'98. 1998 INTERNATIONAL CONFERENCE ON COMMUNICATION TECHNOLOGY. PROCEEDINGS, BEIJING, CHINA, 22-24 OCT. 1998, Seite 5 pp. vol.2 XP002134455 1998, Beijing, China, Publising House of Constr. Mater, China ISBN: 7-80090-827-5

## Beschreibung

Die Erfindung betrifft ein Verfahren zur Konfigurierung einer Netzwerksabschluß-Einheit für die paketweise, asynchrone Asynchronous Transfer Mode ATM-Übertragung von Daten, wobei die Daten auf Datenzellen aufgeteilt sowie die Datenzellen zu Datenpaketen zusammengefaßt werden und die Datenpakete entweder mit konstanter Datenrate CBR, z.B. Sprach- und Videodaten, oder mit nicht konstanter Datenrate UBR übertragen werden, und wobei die Datenzellen bzw. -pakete über die Netzwerksabschluß-Einheit empfangen und gesendet werden, welche eine Schnittstelle zwischen einer Übertragungsleitung und einem Datenendgerät darstellt.

Zur Erhöhung der Effizienz wird in vielen Datennetzen bei der Übertragung von Daten das Prinzip der Paketvermittlung angewandt. Die zur Übertragung anstehenden Daten werden dazu an dafür vorgesehenen Knotenpunkten in definierte Pakete unterteilt, mit einer Adresse und weiteren Hilfsinformationen, wie z.B. Fehlersicherung, ausgestattet und unabhängig vom Ursprung und Zielort der Daten paketweise zum nächsten Knoten übertragen, wobei die Pakete in jedem Knoten bis zu ihrer Übertragung zwischengespeichert werden können. Ein dafür ausgelegter Dienst ist z.B. SDH (Synchrone Digitale Hierarchie), bei dem standardisierte Schnittstellen und Multiplexsysteme Übertragungsraten von 155 Mbit/s ermöglichen. Eine Weiterentwicklung davon stellt die Übertragungsart ATM (Asynchronous Transfer Mode) dar, mit deren Hilfe die zu übertragenden Daten in Zellen fester Länge zerlegt und asynchron gemultiplext werden. Zusätzlich werden diese Zellen zu standardisierten Paketen zusammengefaßt.

Der große Vorteil von ATM liegt nun darin, daß die zur Verfügung stehende Bandbreite jeweils bestmöglich genutzt werden kann. Zu diesem Zweck können verschiedene Arten von Übertragungsraten festgelegt werden. So kann beispielsweise zwischen einer konstanten Übertragungsrate CBR (Constant Bit Rate) und einer nicht konstanten Übertragungsrate UBR (Unspecified Bit Rate) gewählt werden, um verschiedene Anforderungen erfüllen zu können. Konstante Bitrate (CBR) wird immer dann erforderlich sein, wenn eine Verzögerung der Datenpakete über vorgegebene Verzögerungszeiten hinaus störend wirken könnte, wie es etwa bei Video- oder Sprachübertragungen der Fall ist. Die UBR-Übertragung kann generell im Datenverkehr eingesetzt werden, da für diesen Zweck eine Veränderung der Datenübertragungsrate keine Rolle spielt. An Knoten innerhalb des Datenübertragungsweges werden daher jene Datenpakete, die im CBR-Modus gesendet werden, gegenüber den im UBR-Modus übertragenen bevorzugt, um für die CBR-Pakete immer die konstante Übertragungsrate gewährleisten zu können.

In einem ATM-Netzwerk, das über eine Zweidrahtleitung, z.B. eine Teilnehmerleitung, bis zum Telephonendgerät eines Teilnehmers reicht, wie dies bei Breitbandübertragungsanwendungen z.B. in Zusammenhang mit ADSL (Asynchronous Digital Subscriber Line) verwirklicht ist, existiert beim jeweiligen Teilnehmer eine Netzwerksabschluß-Einheit oder NT (Network Termination)-Einheit, über die die Daten empfangen und gesendet werden, wobei in den erwähnten ADSL-Systemen der Datenempfang im Vordergrund steht, da üblicherweise der Teilnehmer über die Teilnehmerleitung z.B. in Homevideo- oder Intemet-Anwendungen einen hohen Informationsgehalt abruft. Dem Teilnehmer können verschiedenartige NT-Einheiten zur Verfügung stehen, so zum Beispiel eine ATM-Schnittstelle mit 25,6 Mbit/s. Daneben existieren auch andere Standards, wie z.B. Ethernet, auf diese ist die Erfindung aber nicht gerichtet.

Es gibt ATM-NT-Einheiten mit unterschiedlicher Ausstattung, die sich voneinander durch die implementierte Intelligenz unterscheiden. Ein besonderes Merkmal besteht in der Bereitstellung einer Verbindung zwischen der NT-Einheit und einem sogenannten Element-Manager im ATM-Netzwerk auf einer höheren Informationsschicht, der die NT-Einheiten entsprechend konfiguriert. Diese Konfigurationsdaten enthalten unter anderem Informationen über die Art des Datenverkehrs (Quality of Service QoS), z.B. CBR oder UBR, bezogen auf die Adressen der einzelnen Zellen (VPI/VCI). Die jeweilige Konfiguration entscheidet darüber, wie die empfangenen Daten zu behandeln sind. So kann den CBR-Paketen Vorrang eingeräumt werden, da diese keine große oder variable Verzögerung erfahren dürfen. Sie werden daher durch kleine Zellzwischenspeicher geleitet, sind dafür in der Spitzenübertragungsrate begrenzt. UBR-Pakete können in starken Bursts auftreten und sollten daher durch große Paketzwischenspeicher geleitet werden, um einen Paket- bzw. Zellverlust zu vermeiden.

Zusätzlich kann auf den Datenstrom noch das sogenannte EPD (Early Packet Discard)-Verfahren angewandt werden, welches die Zahl der falschen oder verlorenen Zellen reduziert und damit den Datendurchsatz z.B. für Datenübertragungen (TCIP/IP) erhöht.

Findet diese Fern-Konfigurierung nicht oder nur in einem eingeschränkten Ausmaß statt, so kann es zu erheblichen Datenverlusten kommen, wenn etwa UBR-Pakete als CBR-Pakete behandelt werden und aufgrund des geringeren Pufferspeichers ein Großteil der Daten nicht zwischengespeichert werden kann. Ein weiterer Nachteil der herkömmlichen Konfigurierungsverfahren besteht darin, daß bisher kein allgemein gültiges Protokoll für diesen Zweck definiert worden ist und es daher immer wieder zu Anpassungsschwierigkeiten kommt. Weiters erhöht die Fernkonfigurierung auch die Komplexität und somit die Kosten einer ATM-Übertragung.

In der GB 2 324 676 A ist eine Vermittlungsstelle eines ATM-Netzwerks mit einer Vielzahl von Teilnehmer-Endgeräten gezeigt. An jedem Teilnehmer-Netzknoten wird die vom Teilnehmer zu übertragende Information in einen ATM-Datenzellenstrom und in der umgekehrten Richtung ein vom ATM-Netzwerk kommender Datenzellenstrom in eine Teilnehmer-Information mit einem passenden Datenformat gewandelt. Diese Umwandlungen werden in einer ATM-Adaptions-Schicht (AAL) im Teilnehmerknoten vorgenommen, der die Funktion eines Endgeräte-Adaptors ausübt. Der Aufbau einer Verbindung zwischen zwei Teilnehmern geschieht über eine in den Zellenköpfen der Datenzellen mitübertragene Signalisierungsinformation, die allen für die Übertragung ausgewählten Schaltknoten zugänglich ist. In der Adapdonsschicht jedes Teilnehmerknotens können verschiedene Arten von Übertragungsarten, z.B. VBR (variable bit rate) und CBR (constant bit rate) verarbeitet werden.

In dem Artikel von Grundstroem et al ("AN ATM END SYSTEM DESIGN FOR NETWORK TERMINATION IN HETEROGENEOUS NETWORK ENVIRONMENT" GLOBAL TELECOMMUNICATIONS CONFERENCE (GLOBECOM), US NEW YORK, IEEE, 1996, Seiten 1534-1538) wird die Verwendung einer Netzwerk-Abschlußeinheit mit einer AAL 5-Adaptionsschicht für die Übertragung von Information aus einem ATM-Netzwerk in ein Kabel-TV-System angegeben, wobei aber immer von einer konstanten Übertragungsrate ausgegangen wird, wodurch eine Unterscheidung zwischen einer CBR- und einer UBR-Übertragung nicht getroffen wird.

Aufgabe der Erfindung ist es, ein Konfigurienuigsverfahren der eingangs genannten Art anzugeben, mit dem eine wirkungsvolle Zuordnung von ATM-Paketen mit unterschiedlichen Übertragungsmoden und den entsprechenden Zwischenspeichern direkt in einer Netzwerksabschluß-Einheit vorgenommen werden kann.

Erfindungsgemäß wird dies dadurch erreicht, daß die Anzahl der in jedem gesendeten oder empfangenen Datenpaket enthaltenen Datenzellen in der Netzwerksabschluß-Einheit ermittelt und daraus bestimmt wird, ob eine ATM-Verbindung mit konstanter CBR- oder nicht konstanter UBR-Datenrate vorliegt, und daß die Datenpakete einer CBR-Verbindung mit höherer Priorität als die Datenpakete der UBR-Verbindung verarbeitet werden.

Auf diese Weise kann jede Netzwerksabschluß-Einheit völlig unabhängig vom übrigen Netzwerk eine Analyse darüber vornehmen, wie der eintreffende bzw. ausgehende Datenverkehr zu behandeln ist, wodurch Datenverluste und komplexe Protokollaufwendungen vermieden werden können.

Für die ATM-Datenübertragung werden je nach Anwendung verschiedene Adaptionsschichten (adaption layers AAL) definiert, für CBR-Verbindungen üblicherweise AAL1 oder AAL5 und für UBR-Verbindungen AAL5. Bisher bekannte Netzwerksabschluß-Einheiten können die Art der gerade vorliegenden Übertragung nicht selbständig feststellen und müssen daher über das ATM-Netz fernkonfiguriert werden, was einen erhöhten Aufwand bewirkt.

Bei einem Verfahren, bei dem für die Übertragung der Datenpakete Adaptionsschichten mit unterschiedlicher Paketlänge definiert werden, kann in Weiterbildung der Erfindung die Netzwerksabschluß-Einheit die Art der Datenverbindung dadurch ermitteln, daß bei Feststellen eines Datenpakets, welches mehr als eine vorbestimmbare Anzahl von Zellen größer als zwei, vorzugsweise drei Zellen enthält, ein UBR-Datenpaket und in allen anderen Fällen ein CBR-Datenpaket detektiert wird, und daß die ATM-Verbindung entsprechend als UBR- oder CBR-Verbindung klassifiziert wird.

Eine Bevorzugung der CBR-Übertragung kann dabei in weiterer Ausbildung der Erfindung dadurch vorgenommen werden, daß bei Übertragungsbeginn als Anfangswert immer eine CBR-Verbindung angenommen wird.

Um weiters sicherzustellen, daß bei einem in der Netzwerkseinheit eingehenden bzw. von dieser ausgesandten Datenstrom tatsächlich eine aufeinanderfolgende Übertragung von Datenpakten in einer der beiden Übertragungsmoden durchgeführt wird, kann gemäß einem weiteren Ausführungsbeispiel der Erfindung vorgesehen sein, daß erst nach Auswertung der Ergebnisse einer vorbestimmbaren Anzahl von Datenpaketen das Vorliegen einer UBR- oder CBR-Verbindung festgestellt wird.

Wird schließlich eine UBR- oder eine CBR-Verbindung in der Netzwerksabschluß-Einheit festgestellt, so kann nach einer Variante der Erfindung vorgesehen sein, daß die von der Netzwerksabschluß-Einheit als Datenpakete einer UBR-Verbindung detektierten Datenpakete einem ersten Zwischenspeicher und die von der Netzwerksabschluß-Einheit als Datenpakete einer CBR-Verbindung detektierten Datenpakete einem zweiten Zwischenspeicher mit einem gegenüber dem des ersten Zwischenspeichers niedrigerem Speichervermögen zugeleitet werden.

Gemäß einem weiteren Merkmal der Erfindung kann vorgesehen sein, daß bei Feststellen einer UBR-Verbindung die Netzwerksabschluß-Einheit optional in den Early Packet Discard EPD-Modus gesetzt wird.

Weiters betrifft die Erfindung eine Netzwerksabschluß-Einheit für die paketweise, asynchrone Asynchronous Transfer Mode ATM-Übertragung von Daten, über die in Zellen unterteilte und zu Paketen mit mehreren Zellen zusammengefaßte Daten mit konstanter CBR- sowie nicht konstanter UBR- Datenrate gesendet und empfangen werden können, wobei ein den UBR-Daten zugeordneter erster Zwischenspeicher und ein den CBR-Daten zugeordneter zweiter Zwischenspeicher vorgesehen sind, insbesondere zur Anwendung des erfindungsgemäßen Verfahrens dienen kann.

Aufgabe der Erfindung ist es, eine Netzwerksabschluß-Einheit anzugeben, die in der Lage ist, eine selbständige Konfigurierung hinsichtlich der Art der Datenübertragung vorzunehmen.

Erfindungsgemäß wird dies dadurch erreicht, daß sie eine Vorrichtung zur Bestimmung der Anzahl der in jedem Datenpaket enthaltenen Datenzellen umfaßt, welche entsprechend der festgestellten Anzahl der Datenzellen eine Klassifizierung der vorliegenden ATM-Verbindung vornimmt und gemäß dieser Klassifizierung die Datenpakete entweder in den den CBR-Daten zugeordneten Zwischenspeicher oder in den den UBR-Daten zugeordneten Zwischenspeicher umlenkt.

Auf diese Weise kann für eine bestehende Datenverbindung festgestellt werden, in welchem Modus die Übertragung gerade durchgeführt wird, sodaß eine entsprechende Beeinflussung der Netzwerksabschlußeinheit durchführbar ist.

Nachfolgend wird die Erfindung anhand des in den beigeschlossenen Zeichnungen dargestellten Ausführungsbeispiels eingehend erläutert. Es zeigt dabei
Fig.1 eine schematische Darstellung einer ATM-Zelle;
Fig.2 eine schematische Darstellung eines AAL5-Pakets;
Fig.3 eine schematische Darstellung des Zellenkopfes der letzten Zelle eines AAL5-Pakets und
Fig.4 ein Blockschaltbild eines ATM-Nachrichtenübertragungssystems mit einer Ausführungsform der erfindungsgemäßen Netzwerksabschluß-Einheit.

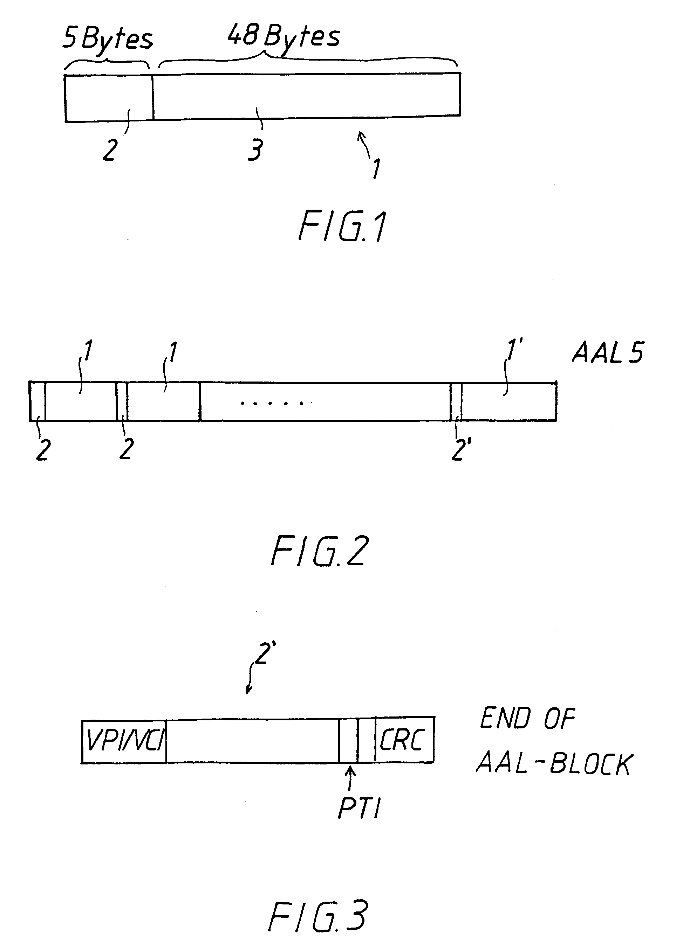

Fig.1 zeigt eine standardisierte ATM-Zelle 1, wie sie zur Datenübertragung eingesetzt wird. Sie besteht aus einem Zellenkopf oder Header 2 mit 5 Bytes und einem Nutzdatenfeld 3 in der Länge von 48 Bytes. Zellen dieser Art werden asynchron, also ohne vorher fest zugewiesene Plätze durch Multiplexen übertragen. Für die Vermittlung der Zellen zwischen aufeinanderfolgenden Übertragungsabschnitten wird die im Zellenkopf enthaltene Kennung (VPI/VCI) ausgewertet, über die festgestellt werden kann, welche ATM-Verbindung gerade vorliegt.

Während der Übertragung von Daten zwischen einer Datenquelle und einer Datensenke können im ATM-Verfahren jeder Verbindung verschiedene Adaptionsschichten (AAL-adaption layers), z.B. AAL1, AAL5, zugeordnet werden, wobei jeweils mehrere Zellen 1, 1' (bis zu 1365 Zellen entsprechend einer Nutzbit-Rate von 64 kB) zu einem Paket zusammengefaßt und übertragen werden (Fig.2). Jeder Zellenkopf der letzten Zelle eines Pakets hat eine spezielle Kennung (VCI/VPI), an der ein AAL5-Paket erkennbar ist. Tritt eine solche Kennung auf, ist die Adaptionsschicht als AAL5 definiert. Es ist damit aber noch keine eindeutige Identifizierung der Übertragungsart (QoS Quality of Service) feststellbar, da auch CBR-Verbindungen in AAL5-Paketen eingepackt sein können.

Typische Anwendungen von CBR (Constant Bit Rate)-Verbindungen sind Real Time-Übertragungen, also Sprach- und Videoübertragungen, z.B. Videokonferenzen, wo eine Verzögerung nur innerhalb bestimmter Grenzen erfolgen darf. Es werden hauptsächlich AAL1-Pakete für CBR eingesetzt, dennoch kann nach diesem Kriterium keine eindeutige Zuordnung erfolgen, da manchmal eine CBR-Übertragung durchgeführt wird, indem nur eine einzige oder sehr wenige ATM-Zellen in einem AAL5-Paket gesendet werden. Dadurch kann die beim Ein- und Auspacken der ATM-Zellen entstehende Zeitverzögerung gering gehalten werden. Mehr als drei ATM-Zellen pro Paket werden bei einer CBR-Übertragung aber nicht verwendet.

UBR (Unspecified Bit Rate) wird hingegen hauptsächlich für reine Datenübertragungen eingesetzt und immer mit Hilfe von AAL-5 Paketen durchgeführt, die mehr als drei ATM-Zellen beinhalten.

Neben UBR und CBR sind noch andere Formen der Verbindung (z.B. VBR, ABR) möglich, diese sind aber qualitativ der CBR-Gruppe zuzuordnen, sodaß diese hier nicht weiter im einzelnen abgehandelt werden. Für die erfindungsgemäße Anwendung genügen zwei Gruppen, wobei jede Verbindung, die eine konstante Übertragungsrate spezifiziert hat, der CBR-Gruppe zuzurechnen ist.

Dies führt zur folgenden Klassifizierung der beiden Übertragungsarten:
**UBR:** AAL5 und regelmäßig Paketlängen größer als drei ATM-Zellen
**CBR:** Alle anderen Verbindungen, z.B. AAL1 oder AAL5 mit drei oder weniger ATM-Zellen

Das Kriterium "3 ATM-Zellen" zur Bestimmung der UBR-Verbindung kann durch eine beliebig andere, vorbestimmbare Zahl größer als zwei ersetzt werden.

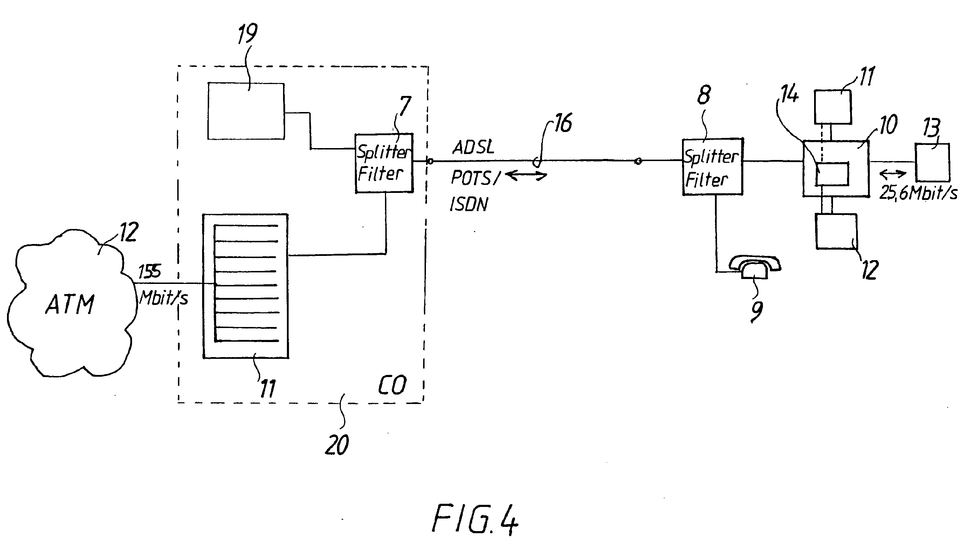

In Fig.4 ist ein Beispiel eines Nachrichtenübertragungssystems abgebildet, für welches das erfindungsgemäße Verfahren anwendbar ist. Ein Telephonendgerät 9 und ein Datenendgerät 13 eines Teilnehmers sind über eine Teilnehmerleitung 16 mit einem Wählamt 20 verbunden, wobei die analogen oder digitalen Signale für das Telephonendgerät 9 durch an den Enden der Teilnehmerleitung 16 angeordnete Splitter-Filter 7, 8 von Breitband-Datensignalen einer ADSL-Übertragung getrennt und zu einer Teilnehmerschnittstelle (line card) 19 geleitet bzw. von dieser empfangen werden. Die vom Datenendgerät 13 empfangenen Daten gelangen aus einem ATM-Netzwerk 12, das mit einer Breitband-ATM/ADSL-Line-card 11 des Wählamts 20 in Verbindung steht, über die Teilnehmerleitung 16 in die Netzwerksabschluß-Einheit 10, in der diese für das Datenendgerät 13 aufbereitet werden. Die paketweise, asynchrone Übertragung von Daten erfolgt im ATM-Verfahren, wobei je nach Anforderung Daten mit konstanter (CBR) sowie nicht konstanter (UBR) Datenrate gesendet und empfangen werden können, und wobei ein den UBR-Daten zugeordneter Zwischenspeicher mit relativ großer Kapazität 11 und ein den CBR-Daten zugeordneter Zwischenspeicher mit relativ kleiner Kapazität 12 vorgesehen sind. In umgekehrter Richtung erfolgt der Transport der Daten vom Datenendgerät 13 zur Netzwerksabschluß-Einheit 10, wo diese in Zellen und Pakete gewandelt und in Richtung zum ATM-Netzwerk 12 übertragen werden.

Das erfindungsgemäße Verfahren zur Konfigurierung der Netzwerksabschluß-Einheit 10 für die paketweise, asynchrone ATM-Übertragung von Daten besteht nun darin, daß die Anzahl der in jedem gesendeten oder empfangenen Datenpaket enthaltenen Datenzellen in der Netzwerks-Einheit 10 ermittelt und daraus bestimmt wird, ob eine ATM-Verbindung mit konstanter (CBR) oder nicht konstanter (UBR) Datenrate vorliegt, und daß die Datenpakete einer CBR-Verbindung mit höherer Priorität als die Datenpakete der UBR-Verbindung verarbeitet werden.

Dazu umfaßt die Netzwerksabschluß-Einheit 10 erfindungsgemäß eine Vorrichtung 14 zur Bestimmung der Anzahl der in jedem Datenpaket enthaltenen Datenzellen, welche entsprechend der festgestellten Anzahl der Datenzellen eine Klassifizierung der vorliegenden ATM-Verbindung vornimmt und gemäß dieser Klassifizierung die Datenpakete entweder in den den CBR-Daten zugeordneten Zwischenspeicher mit relativ kleiner Kapazität 12 oder in den den UBR-Daten zugeordneten Zwischenspeicher mit relativ großer Kapazität 11 umlenkt.

In der Vorrichtung 14 wird dazu jedes eintreffende oder abzusendende Datenpaket überprüft, wobei zunächst das Ende eines Datenpaketes durch Detektion der Paket-Endzelle 1' festgestellt wird, für die in Fig.3 der Zellenkopf 2' schematisch dargestellt ist. Dieser Zellenkopf 2' der Paket-Endzelle 1' unterscheidet sich gegenüber dem Zellenkopf der anderen Zellen 1 durch den Fehlererkennungs-Kode CRC und einem mit PTI bezeichneten Daten-Bit. Sobald die Paket-Endzelle 1' festgestellt worden ist, kann auch eine Aussage über die Anzahl der im gesamten Paket enthaltenen Zellen getroffen werden.

Bei Feststellen eines Datenpakets, welches mehr als eine vorbestimmbare Anzahl von Zellen größer als zwei enthält, vorzugsweise drei Zellen enthält, wird ein UBR-Datenpaket und in allen anderen Fällen ein CBR-Datenpaket detektiert. Entsprechend dieser Feststellung wird die ATM-Verbindung als UBR- oder CBR-Verbindung klassifiziert. Somit werden AAL1-Datenpakete ohne weitere Überprüfung einer CBR-Übertragung zugerechnet.

Von Vorteil ist es, wenn bei Feststellen einer UBR-Verbindung die Netzwerksabschluß-Einheit 10 optional in den EPD (Early Packet Discard)-Modus gesetzt wird, sodaß ein Speicher-Überlauf verhindert wird. Um bei Unregelmäßigkeiten des Datenverkehrs eine Erhöhung der Aussagerichtigkeit zu ermöglichen, kann auch eine statistische Auswertung mehrerer Datenpakete vorgenommen werden, bevor eine Entscheidung darüber getroffen wird, welche Verbindungsart (QoS) vorliegt.

Somit wird erst nach Auswertung der Ergebnisse einer vorbestimmbaren Anzahl von Datenpaketen das Vorliegen einer UBR- oder CBR-Übertragung festgestellt. Wie in Fig.4 angedeutet, kann nun nach dem Feststellen der Art der Übertragung der gerade eintreffenden Datenpakete über die Vorrichtung 14 der erfindungsgemäßen Netzwerksabschluß-Einheit 10 eine Beeinflussung der Zwischenspeicher 11, 12 vorgenommen werden.

Die von der Netzwerksabschluß-Einheit 10 als UBR-Datenpakete detektierten Datenpakete werden einem Zwischenspeicher 11 mit relativ hohem Speichervermögen und die von der Netzwerksabschluß-Einheit 10 als CBR-Datenpakete detektierten Datenpakete einem Zwischenspeicher 12 mit relativ niedrigem Speichervermögen zugeleitet, wo sie für die Weiterverarbeitung zwischengespeichert werden. Damit ist eine netzwerksunabhängige und selbständige Konfigurierung der Netzwerksabschluß-Einheit möglich. Beim Einschalten oder beim Übertragungsbeginn sollten in der Netzwerksabschlußeinheit alle Verbindungen als CBR-Verbindungen angenommen werden.

## Patentansprüche

1. Verfahren zur Konfigurierung einer Netzwerksabschluß-Einheit für die paketweise, asynchrone Asynchronous Transfer Mode ATM-Übertragung von Daten, wobei die Daten auf Datenzellen aufgeteilt sowie die Datenzellen zu Datenpaketen zusammengefaßt werden und die Datenpakete entweder mit konstanter Datenrate CBR, z.B. Sprach- und Videodaten, oder mit nicht konstanter Datenrate UBR übertragen werden, und wobei die Datenzellen bzw. -pakete über die Netzwerksabschluß-Einheit (10) empfangen und gesendet werden, welche eine Schnittstelle zwischen einer Übertragungsleitung (16) und einem Datenendgerät (13) darstellt, **dadurch gekennzeichnet, daß** die Anzahl der in jedem gesendeten oder empfangenen Datenpaket enthaltenen Datenzellen in der Netzwerksabschluß-Einheit (10) ermittelt und daraus bestimmt wird, ob eine ATM-Verbindung mit konstanter CBR- oder nicht konstanter UBR-Datenrate vorliegt, und daß die Datenpakete einer CBR-Verbindung mit höherer Priorität als die Datenpakete der UBR-Verbindung verarbeitet werden.

2. Verfahren nach Anspruch 1, wobei für die Übertragung der Datenpakete Adaptionsschichten mit unterschiedlicher Paketlänge definiert werden, **dadurch gekennzeichnet, daß** bei Feststellen eines Datenpakets, welches mehr als eine vorbestimmbare Anzahl von Zellen größer als zwei, vorzugsweise drei Zellen enthält, ein UBR-Datenpaket und in allen anderen Fällen ein CBR-Datenpaket detektiert wird, und daß die ATM-Verbindung entsprechend als UBR- oder CBR-Verbindung klassifiziert wird.

3. Verfahren nach Anspruch 1 oder 2, **dadurch gekennzeichnet, daß** bei Übertragungsbeginn als Anfangswert immer eine CBR-Verbindung angenommen wird.

4. Verfahren nach Anspruch 1, 2 oder 3, **dadurch gekennzeichnet, daß** erst nach Auswertung der Ergebnisse einer vorbestimmbaren Anzahl von Datenpaketen das Vorliegen einer UBR- oder CBR-Verbindung festgestellt wird.

5. Verfahren nach einem der Ansprüche 1 bis 4, **dadurch gekennzeichnet, daß** bei Feststellen einer UBR-Verbindung die Netzwerksabschluß-Einheit (10) optional in den Early Packet Discard EPD-Modus gesetzt wird.

6. Verfahren nach einem der Ansprüche 1 bis 5, **dadurch gekennzeichnet, daß** die von der Netzwerksabschluß-Einheit (10) als Datenpakete einer UBR-Verbindung detektierten Datenpakete einem ersten Zwischenspeicher (11) und die von der Netzwerksabschluß-Einheit (10) als Datenpakete einer CBR-Verbindung detektierten Datenpakete einem zweiten Zwischenspeicher (12) mit einem gegenüber dem des ersten Zwischenspeichers (11) niedrigerem Speichervermögen zugeleitet werden.

7. Netzwerksabschluß-Einheit für die paketweise, asynchrone Asynchronous Transfer Mode ATM-Übertragung von Daten, über die in Zellen unterteilte und zu Paketen mit mehreren Zellen zusammengefaßte Daten mit konstanter CBR- sowie nicht konstanter UBR-Datenrate gesendet und empfangen werden können, wobei ein den UBR-Daten zugeordneter erster Zwischenspeicher (11) und ein den CBR-Daten zugeordneter zweiter Zwischenspeicher (12) vorgesehen sind, insbesondere zur Anwendung des Verfahrens nach einem der Ansprüche 1 bis 6, **dadurch gekennzeichnet, daß** sie eine Vorrichtung (14) zur Bestimmung der Anzahl der in jedem Datenpaket enthaltenen Datenzellen umfaßt, welche entsprechend der festgestellten Anzahl der Datenzellen eine Klassifizierung der vorliegenden ATM-Verbindung vornimmt und gemäß dieser Klassifizierung die Datenpakete entweder in den den CBR-Daten zugeordneten Zwischenspeicher (12) oder in den den UBR-Daten zugeordneten Zwischenspeicher (11) umlenkt.

## Claims

1. A method for configuring a network termination unit for the asynchronous ATM (Asynchronous Transfer Mode) transfer of data in packets, with the data being divided into data cells and the data cells being joined into data packets, and the data packets either being transferred with a constant data rate (CBR), e.g. voice or video data, or with non-constant data rate (UBR), and with the data cells or packets being received or transmitted via the network termination unit (10) which is representative of an interface between a transmission line (16) and a data terminal (13), **characterized in that** the number of the data cells in the network termination unit (10) which are contained in each transmitted or received data packet is determined and it is determined therefrom whether there is an ATM connection with constant CBR or non-constant UBR data rate, and that the data packets of a CBR connection are processed with higher priority than the data packets of the UBR connection.

2. A method according to claim 1, wherein adaptation layers with different packet length arc defined for the transfer of the data packets, **characterized in that** upon determining a data packet which contains more than a predeterminable number of cells larger than two, preferably three cells, a UBR data packet is determined and in all other cases a CBR data packet, and that the ATM connection is accordingly classified as a UBR or CBR connection.

3. A method according to claim 1 or 2, **characterized in that** at the start of the transfer a CBR connection is always assumed as an initial value.

4. A method according to claim 1, 2 or 3, **characterized in that** only after evaluating the results of a predeterminable number of data packets will the presence of a UBR or CBR connection be determined.

5. A method according to one of the claims 1 to 4, **characterized in that** upon determining a UBR connection the network termination unit (10) is optionally put into the EPD (Early Packet Discard) mode.

6. A method according to one of the claims 1 to 5, **characterized in that** the data packets which are detected by the network termination unit (10) as data packets of a UBR connection are supplied to a first intermediate data storage (11) and the data packets which are detected by the network termination unit (10) as data packets of a CBR connection are supplied to a second intermediate data storage (12) with a storage capacity which is lower as compared with that of the first intermediate data storage (11).

7. A network termination unit for the asynchronous ATM (Asynchronous Transfer Protocol) transmission of data in packets, through which data subdivided into cells and combined into packets with several cells can be sent and received with constant CBR and non-constant UBR data rate, with a first intermediate data storage (11) being provided which is associated with the UBR data and a second intermediate data storage (12) which is associated with the CBR data, especially for applying the method according to one of the claims 1 to 6, **characterized in that** it comprises an apparatus (14) for determining the number of the data cells contained in each data packet, which apparatus performs a classification of the present ATM connection according to the determined number of data cells and, according to such classification, diverts the data packets either into the intermediate data storage (12) associated with the CBR data or into the intermediate storage (11) associated with the UBR data.

## Revendications

1. Procédé pour la configuration d'une unité de terminaison de réseau en vue d'une transmission de données asynchrone par paquets en mode de transfert asynchrone ATM, dans lequel les données sont réparties dans des cellules de données et les cellules de données réunies en paquets de données, et les paquets de données sont transmis soit à un débit de données constant CBR, par exemple pour les données de phonie et de vidéo, soit à un débit de données non constant UBR, et dans lequel les cellules ou paquets de données sont reçus et émis par l'unité de terminaison du réseau (10) qui représente une interface entre une ligne de transmission (16) et un terminal de données (13), **caractérisé en ce que** le nombre de cellules de données contenues dans chaque paquet de données reçu ou émis est déterminé dans l'unité de terminaison du réseau (10) et sert à déterminer si la communication est une communication ATM à débit de données constant CBR ou non constant UBR, et **en ce que** les paquets de données d'une communication CBR sont traités avec une priorité plus élevée que les paquets de données de la communication UBR.

2. Procédé selon la revendication 1, dans lequel des couches d'adaptation ayant une longueur de paquets différente sont définies pour la transmission des paquets de données, **caractérisé en ce que** lorsqu'un paquet de données contenant plus qu'un nombre pouvant être prédéterminé de cellules supérieur à deux, de préférence trois cellules, est détecté, un paquet de données UBR est détecté, et dans tous les autres cas un paquet de données CBR, et **en ce que** la communication ATM est classifiée en conséquence comme communication UBR ou CBR.

3. Procédé selon la revendication 1 ou 2, **caractérisé en ce qu'**au début de la transmission, la valeur initiale supposée est toujours une communication CBR.

4. Procédé selon la revendication 1, 2 ou 3, **caractérisé en ce que** la présence d'une communication UBR ou CBR n'est déterminée qu'après l'interprétation des résultats d'un nombre pouvant être prédéterminé de paquets de données.

5. Procédé selon l'une des revendications 1 à 4, **caractérisé en ce que** lorsqu'une communication UBR est détectée, l'unité de terminaison du réseau (10) est facultativement passée dans le mode de suppression anticipée de paquets EPD

6. Procédé selon l'une des revendications 1 à 5, **caractérisé en ce que** les paquets de données détectés par l'unité de terminaison du réseau (10) comme étant des paquets de données d'une communication UBR sont acheminés vers une première mémoire intermédiaire (11) et les paquets de données détectés par l'unité de terminaison du réseau (10) comme étant des paquets de données d'une communication CBR vers une deuxième mémoire intermédiaire (12) ayant une capacité de mémoire inférieure à la première mémoire intermédiaire (11).

7. Unité de terminaison du réseau pour une transmission de données asynchrone par paquets en mode de transfert asynchrone ATM, par laquelle les données réparties en cellules et regroupées en paquets avec plusieurs données peuvent être émises et reçues à un débit de données constant CBR ainsi qu'à un débit de données non constant UBR, dans laquelle sont prévues une première mémoire intermédiaire (11) associée aux données UBR et une deuxième mémoire intermédiaire (12) associée aux données CBR, en particulier pour la mise en oeuvre du procédé selon l'une des revendications 1 à 6, **caractérisée en ce qu'**elle comprend un dispositif (14) pour la détermination du nombre de cellules de données contenu dans chaque paquet, qui réalise en fonction du nombre de cellules de données déterminé une classification de la communication ATM en cours et dirige les paquets de données, selon la classification, vers la mémoire intermédiaire (12) associée aux données CBR ou vers la mémoire intermédiaire (11) associée aux données UBR.
